(19) Europäisches Patentamt
European Patent Office
Office européen des brevets

(11) Veröffentlichungsnummer: **0 209 774**
**B1**

(12) **EUROPÄISCHE PATENTSCHRIFT**

(45) Veröffentlichungstag der Patentschrift: **23.05.90**

(51) Int. Cl.$^5$: **C 08 F 14/06**, C 08 F 2/16

(21) Anmeldenummer: **86109192.4**

(22) Anmeldetag: **05.07.86**

# (54) Verfahren zur Herstellung von verpastbaren Vinylchlorid-Polymerisaten.

(30) Priorität: **23.07.85 DE 3526251**

(43) Veröffentlichungstag der Anmeldung:
**28.01.87 Patentblatt 87/05**

(45) Bekanntmachung des Hinweises auf die Patenterteilung:
**23.05.90 Patentblatt 90/21**

(84) Benannte Vertragsstaaten:
**BE CH DE FR GB IT LI NL SE**

(56) Entgegenhaltungen:
**DE-B-1 109 896**
**FR-A-2 370 760**

(73) Patentinhaber: **HÜLS AKTIENGESELLSCHAFT**
**Patentabteilung / PB 15 - Postfach 13 20**
**D-4370 Marl 1 (DE)**

(72) Erfinder: **Kruse, Wolfgang Andreas, Dr.**
**Uerdinger Strasse 8**
**D-4370 Marl (DE)**
Erfinder: **Boeke, Burkhard, Dr.**
**Im Hundel 34**
**D-4358 Haltern 6 (DE)**

**Die Akte enthält technische Angaben, die nach dem Eingang der Anmeldung eingereicht wurden und die nicht in dieser Patentschrift enthalten sind.**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Es ist bereits bekannt, Polyvinylchlorid, welches für die Pastenherstellung geeignet ist, nach dem kontinuierlichen oder diskontinuierlichen Verfahren herzustellen.

Nach der DE-B-11 09 896 erhält man Pasten-PVC bei Verwendung von vorzugsweise 5- bis 10fachethoxilierten Fettalkoholen in einem kontinuierlichen Verfahren. Dieses führt zu einem Pasten-PVC für Plastisole mit erwünscht niedriger Viskosität im hohen Scherbereich, jedoch mit hoher Viskosität bei niedrigen Schergeschwindigkeiten. Außerdem ist der zeitliche Anstieg der Pastenviskosität relativ hoch. Weiterhin enthalten diese PVC-Typen relativ hohe Emulgatorkonzentrationen. Eine hohe Emulgatorkonzentration wirkt sich jedoch im Endprodukt und bei der Verarbeitung nachteilig aus.

Die nach dem diskontinuierlichen Verfahren hergestellten Polyvinylchlorid-Typen können durch Emulsionspolymerisation mit deutlich geringeren Mengen an Emulgator polymerisiert werden, vor allem, wenn der Emulgator nach dem Verfahren der DE-PS 19 64 029 oder gemäß den ausgelegten Unterlagen des belgischen Patentes 656 985 zugegeben wird. In allen Fällen entstehen jedoch bei den genannten diskontinuierlichen Verfahren Plastisole mit höherer Pastenviskosität als bei der kontinuierlichen Polymerisation.

Bekannt ist auch die Vinylchloridpolymerisation nach dem sogenannten Mikrosuspensionsverfahren, wie es zum Beispiel in der DE-AS 10 69 387 beschrieben ist. Wenn auch durch die oft auftretende Dilatanz der Pasten, die mit diesen PVC-Typen hergestellt werden, bei höheren Schergefällen die Verarbeitung nach dem Streichverfahren erschwert sein kann, ist doch der Einsatz dieses Pastenpolyvinylchloridtyps weit verbreitet. Zur Stabilisierung der Mikrosuspensionspolymerisation des Vinylchlorids ist neben Emulgatoren der Einsatz von langkettigen Alkoholen beschrieben, zum Beispiel in der DE-OS 15 20 133. Beansprucht werden in verschiedenen Patentschriften geradkettige aliphatische Alkohole mit einer C-Zahl von 10 bis 30. Bevorzugt werden in vielen Anwendungen die niedrigen Homologen wie $C_{10}$-$C_{14}$, da deren Schmelzpunkt nur wenig über Raumtemperatur liegt und ihre Handhabung als Flüssigkeiten nur wenig Energieaufwand benötigt. Dagegen benötigen die höheren Alkohole ab etwa $C_{14}$ mit ihren Schmelzpunkten $> 50°C$ einen höheren energetischen und technischen Aufwand. Bei dem Einsatz der niedrigeren Homologen kann sich deren Flüchtigkeit im Weich-Polyvinylchloridfertigteil jedoch störend bemerkbar machen. Diese Flüchtigkeit führt zu dem vom Fachmann so benannten Fogging. Dieses Fogging ist z.B. beim Einsatz von PVC im Automobilsektor besonders unerwünscht, da es zu einem schmierigen, störenden Belag, z.B. auf den Glasscheiben, führen kann.

Weitere diskontinuierliche Verfahren zur Vinylchloridpolymerisation verwenden als Dispergierhilfsmittel organische Substanzen niedriger Wasserlöslichkeit, jedoch guter VC-Löslichkeit. Als Stand der Technik seien genannt:

1. DE-OS 28 50 105.
2. DE-OS 27 42 178.
3. EP-A- 0 030 524.
4. DE-OS 32 10 891.
5. DE-OS 32 42 088.
6. DE-OS 33 43 766.

Die Polymerisation nach den Verfahren 1 bis 6 werden mit Fettalkoholen als Polymerisationshilfsmittel durchgeführt. In einem Polymerisationsautoklaven werden Wasser, Emulgator, Alkohol, gegebenenfalls Initiator und weitere Zusätze gegeben und unter Rühren über den Schmelzpunkt des Alkohols aufgeheizt. Vor der Vinylchlorid-Zugabe wird gegebenenfalls auf die Polymerisationstemperatur abgekühlt. Wird nach diesen Verfahren ein Fettalkohol verwendet, dessen Schmelzpunkt deutlich oberhalb der Polymerisationstemperatur liegt, wird ein Pasten-Polyvinylchlorid erhalten, das zu hochviskosen Pasten führt, wie Vergleichsversuch A zeigt. An sich wäre es wünschenswert, wegen der geringeren Flüchtigkeit langkettige Fettalkohole ab $C_{20}$ einzusetzen. Deren Schmelzpunkte liegen jedoch deutlich oberhalb der Polymerisationstemperatur, die gewöhnlich für die Herstellung von Pasten-Polyvinylchlorid eingestellt wird. Dies bedeutet z.B. für ein Pasten-PVC mit dem K-Wert 70, daß ein Fettalkohol bis etwa $C_{18}$ eingesetzt werden kann. Ebenfalls können Alkoholmischungen von hochmolekularen und niedermolekularen Fettalkoholen eingesetzt werden, um den Schmelzpunkt abzusenken. Bei Erhöhung des K-Wertes ist dementsprechend die C-Kettenzahl mindestens eines Teils des Fettalkohols zu verkürzen. Diese Fettalkohole führen jedoch zu dem nicht erwünschten Fogging, welches dann insbesondere bei höheren K-Werten ausgeprägt sein wird. Werden alleine oder in Abmischung Fettalkohole eingesetzt, deren Schmelzpunkt nahe der Raumtemperatur ist, wird ein Pasten-PVC erhalten, welches zu hochviskosen Pasten, wie Vergleichsversuch B zeigt, führt. In der DE-OS 28 50 105 wird auf diesen Befund hingewiesen und angemerkt, daß der Schmelzpunkt des Hilfsstoffes nicht wesentlich ($< 10°C$) unterhalb der Polymerisationstemperatur liegen darf, um hochviskose Pasten und geringe Stabilität der Dispersion zu vermeiden.

Diese Nachteile des Standes der Technik werden überwunden durch ein Verfahren zur Herstellung von verpastbaren Polymeren des Vinylchlorids oder von Mischungen des Vinylchlorids mit bis zu 30 Gewichtsprozent copolymerisierbarer Monomerer durch diskontinuierliche Polymerisation in wäßriger

Emulsion oder in wäßriger Mikrosuspension in Gegenwart von mindestens einem wasserlöslichen oder monomerenlöslichen Katalysator und von einem Emulgatorsystem aus anionischem Emulgator und Dispergierhilfsmittel, dadurch gekennzeichnet, daß als Dispergierhilfsmittel ein Alkanolpolyglykolether der allgemeinen Formel

$$R - O - ( - CH_2 - \underset{R_1}{\underset{|}{C}}HO - )_n - H$$

eingesetzt wird, in der R einen Alkylrest mit 16 bis 30 Kohlenstoffatomen, $R_1$ H oder einen Alkylrest mit 1 bis 2 Kohlenstoffatomen und n eine ganze Zahl von 1 bis 3 bedeutet.

In der DE-B-11 09 896 werden zwar auch Alkanolpolyglykolether eingesetzt, der bevorzugte Ethoxilierungsgrad beträgt aber 5 bis 10. Es wird davon abgeraten, Verbindungen mit 3 bis 4 oder mehr als 10 Mol Ethylenoxid zu verwenden, da dieses zu Polymerisaten mit höheren Viskositätsbereichen führt.

Nach der erfindungsgemäßen Verfahrensweise wird im Falle der wäßrigen Emulsion aus dem anionischen Emulgator, dem Dispergiermittel und zumindest einem Teil der zur Polymerisation benötigten wäßrigen Phase eine Prädispersion hergestellt, und es können dann erst die übrigen Komponenten zugegeben werden.

Im Falle des Einsatzes eines monomerlöslichen Katalysators kann aus dem anionischen Emulgator, dem Dispergierhilfsmittel, dem monomerlöslichen Katalysator und zumindest einem Teil der zur Polymerisation benötigten wäßrigen Phase eine Prädispersion hergestellt und dann erst das Monomere zugefügt werden. Dabei kann der Dispergiervorgang mittels Homogenisiermaschine durchgeführt werden.

Es kann auch eine Mischung aus dem anionischen Emulgator, dem Dispergierhilfsmittel, dem Katalysator, zumindest einem Teil der zur Polymerisation benötigten wäßrigen Phase und zumindest einem Teil des Monomeren mittels Homogenisiermaschine homogenisiert werden.

Es ist auch möglich, daß eine Mischung aus dem anionischen Emulgator, dem Dispergierhilfsmittel und gegebenenfalls Wasser dem Polymerisationsansatz während der Polymerisationsperiode absatzweise oder kontinuierlich zugegeben wird.

Man kann erfindungsgemäß auch die Prädispersion nur mit 30 bis 80 Gewichtsprozent der insgesamt benötigten Menge des anionischen Emulgators herstellen und dem Polymerisationsansatz zufügen, während der Rest des anionischen Emulgators oder eines den anionischen Emulgator bildenden Bestandteiles nach einem Umsatz von 10 bis 60 Gewichtsprozent dem Polymerisationsgemisch absatzweise oder kontinuierlich als wäßrige Lösung zudosiert wird. In der für das Dispergierhilfsmittel angegebenen allgemeinen Formel

$$R - O - ( CH_2 - \underset{R_1}{\underset{|}{C}}HO - )_n - H$$

ist n vorzugsweise eine Zahl von 1 bis 2, ferner bedeutet R vorzugsweise einen geradkettigen Alkylrest oder Alkylphenylrest mit 18 bis 22 C-Atomen. $R_1$ ist vorzugsweise Wasserstoff oder ein Methylrest.

Die den Dispergierhilfsmitteln zugrundeliegenden Alkohole sind z. B.: Cetylalkohol, Stearylalkohol, Oleylalkohol, Arachylalkohol, Behenylalkohol, Lignocerylalkohol, Cerotylalkohol. Bevorzugt werden Stearylalkohol, Arachylalkohol und Behenylalkohol. Es können auch Gemische solcher Alkohole eingesetzt werden. Die den Glykolethern zugrundeliegenden Alkohole können mit 1 bis 3 Mol Ethylenoxid, 1,2-Propylenoxid oder 1,2-Butylenoxid nach üblichen Methoden umgesetzt werden. Vorzugsweise wählt man zur Umsetzung 1 bis 2 Mol Propylenoxid. Insbesondere benutzt man zur Umsetzung mit dem Grundalkohol 1 bis 2 Mol Ethylenoxid. Dem Fachmann ist es bekannt, daß bei einer solchen Umsetzung eine Poisson-Verteilung entsteht, d.h. daß nach der Umsetzung eines Alkohols mit z.B. 2 Mol Ethylenoxid auch gewisse kleinere Anteile an Glykolethern mit höheren und mit niedrigeren Oxethylierungsgraden sowie nicht umgesetzter Alkohole vorliegen. Mit dem Oxalkylierungsgrad für die Alkoholglykolether ist stets die zur Umsetzung mit dem Alkohol verwendete Molzahl an Alkylenoxid gemeint.

Die als Dispergierhilfsmittel einzusetzenden Alkoholglykolether sollen in einer Menge von 0,05 bis 2,5, vorzugsweise 0,1 bis 2,0 Gewichtsprozent, bezogen auf Monomere, verwendet werden.

Als anionische Emulgatoren kommen die anionischen Tenside infrage, welche in Ullmanns Enzyklopädie der technischen Chemie, Band 22, Seite 455 ff., (1982), aufgeführt werden.

Beispielsweise handelt es sich um Alkalimetall- oder Ammoniumsalze von Fettsäuren, von Alkylsulfonsäuren, Alkylarylsulfonsäuren, Sulfobernsteinsäureestern oder Fettalkoholsulfaten, welche in Mengen von 0,2 bis 3,0 Gewichtsprozent, vorzugsweise 0,5 bis 1,5 Gewichtsprozent, bezogen auf das Monomere, eingesetzt werden sollten.

Das erfindungsgemäße Verfahren ermöglicht die Herstellung von Latices mit einem Feststoffgehalt von bis zu 60 Gewichtsprozent ohne nennenswerte Bildung von unerwünschtem Koagulat. Die Viskosität der Pasten des nach dem erfindungsgemäßen Verfahren gewonnenen Polyvinylchlorids ist niedrig, und die

Pasten zeigen ein nahezu newton'sches Fließverhalten. Fertigartikel, die aus diesem Pasten-PVC gewonnen werden, zeichnen sich durch besonders geringes Fogging aus. Der Schmelzpunkt der Dispergierhilfsstoffe kann mehr als 10°C unterhalb der Polymerisationstemperatur liegen, ohne die Stabilität der Dispersionen oder die Pastenviskositäten negativ zu beeinflussen. Außerdem kann in diesem Fall beim Dispergiervorgang sofort die Polymerisationstemperatur eingestellt werden, ohne zusätzliche Energie und Zeit für das Aufschmelzen des Alkohols und das Abkühlen auf Polymerisationstemperatur zu benötigen.

Nach dem erfindungsgemäßen Verfahren kann nach Auspolymerisieren ein Latex mit einem Feststoffgehalt bis zu 60% erhalten werden. Die Komponenten Alkoholglykolether und anionischer Emulgator des Emulgatorsystems können in Wasser dispergiert werden, so daß eine Prädispersion gebildet wird. In dem Fall, daß für die Polymerisation ein monomerlöslicher Initiator gewählt wird, kann dieser ebenfalls der Mischung zugegeben werden. Falls die Schmelzpunkte der Polyglykolether oberhalb der Raumtemperatur liegen, wird der Dispergiervorgang vorteilhaft bei Temperaturen oberhalb des Schmelzpunktes des Polyglykolethers durchgeführt. Gegebenenfalls wird nach Zufügen von Vinylchlorid die Polymerisationstemperatur eingestellt. Der Dispergiervorgang kann auch mittels Homogenisiermaschinen durchgeführt werden. Die Homogenisierung kann sowohl vor als auch nach Zugabe des Vinylchlorids durchgeführt werden. Der Emulgator bzw. die Emulgatormischung kann kontinuierlich bzw. auch absatzweise während der Polymerisationsperiode zugegeben werden, wie es in der DE-OS 32 10 891 beschrieben ist. Auch ein Teil des reinen Emulgators kann dosiert werden gemäß der DE-OS 33 43 766. Die Flüchtigkeit der als Dispergierhilfsmittel bestimmten Glykolether ist wesentlich geringer als die der zugrundeliegenden Alkohole. Gleichzeitig kann durch die Alkoxylierung der Alkohole der Schmelzpunkt deutlich unter die Polymerisationstemperatur abgesenkt werden, die zur Erzeugung von hochmolekularem Pasten-Polyvinylchlorid benötigt werden. Bei der Einstellung der beanspruchten Alkoxylierungsgrade n = 1 bis 3 kann ein Teil des eingesetzten Alkohols entsprechend den statistischen Gesetzen unverändert im Reaktionsgemisch verbleiben. Dieser Alkohol kann destillativ entfernt werden. Der Vorteil der Absenkung des Schmelzpunktes und der verringerten Flüchtigkeit bleibt jedoch erhalten, wenn das undestillierte Reaktionsgemisch direkt als solches eingesetzt wird.

Besonders überraschend ist es, daß man erfindungsgemäß zu PVC-Produkten kommt, die zu niedrigviskosen Pasten verarbeitet werden können, obwohl in der Patentliteratur (DE-OS 27 42 178, Seite 10, Zeilen 9 bis 11) von der Verwendung alkoxylierter Alkohole abgeraten wird und obwohl die Wasserlöslichkeit der Grund-Alkohole durch die Alkoxylierung erhöht wird. Ebenso überraschend war es, daß die Wirkung als Dispergierhilfsmittel erhalten bleibt, wenn durch Alkoxylierung der Schmelzpunkt mehr als 10°C unter der Polymerisationstemperatur liegt. Ebenfalls überrascht es, daß trotz der eingeführten Methylseitengruppen bei Alkoxylierung mit Propylenoxid die ausgezeichnete Wirkung als Dispergierhilfsmittel erhalten bleibt. Die Verwendung nichtionischer Emulgatoren vom Typ alkoxylierter Alkohole neben anionischen Emulgatoren, vor allem bei der Herstellung von Copolymeren des Vinylchlorids, ist bereits beschrieben, z.B. in der US-PS 3 399 157 oder der DE-PS 26 04 630. Bei den beschriebenen nichtionischen Emulgatoren handelt es sich jedoch immer um Produkte mit HLB-Werten > I0. Dazu sind wesentlich höhere Alkoxylierungsgrade erforderlich (10 bis 20) als die hier beanspruchten. Diese hoch alkoxylierten Produkte sind jedoch als Dispergierhilfen nicht wirksam, sondern führen in den beschriebenen Verfahrensweisen bei den angegebenen Konzentrationen zu Instabilitäten bei der Polymerisation und verschlechtern die thermische Stabilität des Polyvinylchlorids erheblich. Die erfindungsgemäß eingesetzten alkoxylierten Alkohole stellen keine Öl-in-Wasser-Emulgatoren dar.

Bei der Wahl eines geeigneten monomerlöslichen Initiators ist darauf zu achten, daß dieser während des Dispergiervorgangs noch keinen merklichen Zerfall erleidet. Es werden bevorzugt die Initiatoren eingesetzt, die bei der benötigten Dispergiertemperatur Halbwertszeiten von > 10 Stunden, bevorzugt > 20 Stunden, aufweisen. Wird aufgrund des hohen Schmelzpunktes eines eingesetzten Alkylglykolethers ein Initiator mit einer großen Halbwertszeit gewählt, so sollte die spätere Polymerisationsreaktion mittels geeigneter Reduktionsmittel gesteuert werden.

Bis auf die Wassermengen, welche für die mögliche Dosierung von Emulgatorsystemen und eventuell Aktivator sowie Reduktionsmittel benötigt werden, kann die Gesamtmenge des für die Polymerisation benötigten Wassers bei der Herstellung der Prädispersion im Reaktionskessel mit vorgelegt werden. Dem Wasser können Puffersalze zugegeben werden, wie z.B. Natrium-pyrophosphat, Natrium-acetat oder Natrium-borat.

Als Comonomere lassen sich z.B. einsetzen: Vinylacetat, Vinylidenchlorid, Vinylether, Acrylnitril, Acrylsäureester, Maleinsäuremono- und -diester. Das Comonomere kann im Copolymerisat bis zu 30, vorzugsweise zwischen 1 und 20 Gewichtsprozent, anwesend sein. Das Verhältnis Monomere zu Wasser kann bis zu sehr hohen Vinylchloridkonzentrationen beliebig sein (ca. 1:0,5 bis 1:1,6). Im allgemeinen wird man bestrebt sein, so zu polymerisieren, daß man Latices mit einem möglichst hohen Feststoffgehalt erhält von beispielsweise 50 bis 60 Gewichtsprozent.

Der Endumsatz sollte natürlich möglichst hoch sein.

Als wasserlösliche Katalysatoren lassen sich die üblichen Perverbindungen einsetzen, wie $H_2O_2$, Kaliumpersulfat sowie die Redoxsysteme, wie sie z.B. in Kainer, Polyvinylchlorid und Vinylchlorid-Mischpolymerisate, Springer-Verlag, 1965, Seite 46 ff., angegeben sind.

Weiterhin können unter Berücksichtigung der jeweiligen Dispergier- und Homogenisierungstemperatur monomerlösliche Initiatoren und — falls erforderlich — die üblicherweise

für eine Redox-Reaktion verwendeten Reduktionsmittel eingesetzt werden. Als Beispiele für monomerlösliche Initiatoren seien genannt: Azoverbindungen, wie Azobis-isobutyronitril, 2.2'-Azo-bis-(2.4-dimethylvaleronitril); oder Peroxide, wie Di-cyclohexylperoxidicarbonat, Di-n-butylperoxidicarbonat, Di-cetylperoxidicarbonat, Di-lauroylperoxid, Di-benzoylperoxid, Di-propionylperoxid, tert.-Butylperoxi-2-ethylhexanoat, tert.-Butylperoxibenzoat, Cumylhydroperoxid, tert.-Butylhydroperoxid. Beispiele für Reduktionsmittel sind Natriumthiosulfat, Natrium-formaldehydsulfoxilat, Ascorbinsäure, Isoascorbinsäure und Natriumborhydrid.

Die Initiatoren können in üblichen Mengen von 0,005 bis 0,5 Gewichtsprozent, vorzugsweise 0,01 bis 0,1 Gewichtsprozent, bezogen auf das Monomere, eingesetzt werden.

Die Polymerisationstemperatur kann — je nach gewünschtem Molekulargewicht — 35 bis 70 °C betragen.

Die Polymerisationsdauer ist — wie stets — von der Polymerisationstemperatur und der Katalysatorkonzentration abhängig. Sie kann etwa 4 bis 16 Stunden betragen.

Es sollte zweckmäßigerweise mit üblichen Umfangsgeschwindigkeiten und mit den bei Emulsions- bzw. Mikrosuspensionspolymerisationsverfahren üblicherweise eingesetzten Blatt- oder Impellerrührern gerührt werden.

Das erfindungsgemäße Verfahren wird anhand der nachstehenden Beispiele erläutert. Die Schmelzpunkte der verwendeten Dispergierhilfsstoffe sind in Tabelle 3 aufgeführt.

### Beispiel 1

In einem 6-$m^3$-Rührautoklaven werden 1 600 kg 60°C warmes entmineralisiertes Wasser vorgelegt. Unter Rühren werden 18 kg Na-alkylbenzol-sulfonat (Gemisch von $C_{10}$-$C_{18}$-n-Alkyl-benzol-sulfonaten), 22 kg eines $C_{20}/C_{22}$-n-Alkyl-di-ethylenglykolethers sowie 3,7 kg Mononatriumphosphat zugegeben. Nach Ausschluß von Luft/Sauerstoff werden 1 800 kg Vinylchlorid zugegeben. Die Mischung wird auf 52°C, die Rührerdrehzahl auf 10 Upm eingestellt. Durch Zudosierung einer 0,5%-igen $H_2O_2$-Lösung und einer 0,2%igen wäßrigen Ascorbinsäurelösung wird die Reaktion gestartet. Die weitere Dosierung der Katalysatorkomponenten wird so eingestellt, daß bei nahezu voller Kühlkapazität (Mantel: 600 000 kJ/h; Rückflußkühler: 120 000 kJ/h) die Polymerisationstemperatur von 52°C konstant bleibt. Die Zeit vom Reaktionsbeginn bis zum Druckabfall beträgt ca. 6 Stunden.

Die entmonomerisierte Dispersion wird über einen Sprühtrockner zu Polyvinylchlorid-Pulver aufgearbeitet. Die Bedingungen werden so eingestellt, daß die Körnung des Pulvers nur 2 Gewichtsprozent an Teilchen > 40 µm enthält. Zur Bestimmung des rheologischen Verhaltens in einer Paste werden jeweils 100 Teile Polyvinylchlorid und 60 Teile Dioctylphthalat vermischt und die Pasten-Viskositäten nach 2-Stunden Lagerzeit gemessen. Alle gemessenen Pastenviskositäten bei $D = 1\ s^{-1}$ und $100\ s^{-1}$ sind in Tabelle 1 zusammengefaßt.

Zur Prüfung der Foggingwerte des Pulvers wird das Produkt folgendem Test unterworfen:

Als Maß für das Fogging wird der Restglanz einer Glasplatte mit einem 60°-Reflektometer gemessen, nachdem diese Glasplatte einem Foggingniederschlag ausgesetzt war. Es werden 15 g PVC-Pulver in eine 1-l-Becherglas mit ebenem Boden, einer Höhe von 190mm und einem Außendurchmesser von 90mm und geschliffenem Rand eingefüllt. Das Becherglas wird mit Hilfe von Silikonringen und einer speziell gereinigten 2mm dicken Glasscheibe der Abmessungen 115mm x 115mm verschlossen und in ein auf 90°C thermostatisiertes Bad eingetaucht. Auf die Glasplatte wird von oben eine auf 20°C gekühlte Kühlplatte über die gesamte Fläche aufgelegt, so daß eventuell vorhandene flüchtige Anteile des auf 90°C erwärmten Pulvers an der auf 20°C gekühlten Glasscheibe kondensieren können. Nach 6 Stunden wird die Glasscheibe aus der Apparatur entnommen und mit einem lichtelektrischen Glanzmeßgerät mit einem Meßkopf für 60° Einfallswinkel und 60° Ausfallswinkel der Restglanz der Scheibe gemessen (Scheibenglanz vor Versuchsbeginn: 100%). Die Glanzwerte aller Messungen sind in Tabelle 2 zusammengefaßt.

### Beispiel 2

In einem 6-$m^3$-Rührautoklaven werden 1 600 l 60°C warmes entmineralisiertes Wasser vorgelegt. Unter Rühren werden 16,8 kg Myristinsäure, 1,5 kg Natronlauge, 200 g Natriumborhydrid, 4 g Kupfersulfat und 18,3 kg Stearyl-mono-ethylenglykolether zugegeben. Nach Ausschluß von Luft/Sauerstoff werden 1 800 kg Vinylchlorid zugegeben. Diese Mischung wird auf eine Temperatur von 42°C, die Rührerdrehzahl auf 10 Upm eingestellt. Die Reaktion wird mit einer 0,5%igen wäßrigen $H_2O_2$-Lösung gestartet. Eine halbe Stunde nach Reaktionsbeginn werden 100 kg einer 2,5%igen wäßrigen Natriumhydroxidlösung innerhalb von 4 Stunden zudosiert. Die Aufarbeitung der Dispersion (Feststoffgehalt: 48%) erfolgt wie in Beispiel 1. Der pH-Wert des wäßrigen Produktauszuges wird mit Hilfe einer 6%igen Oxalsäurelösung, die in der Verdüsungsanlage mitversprüht wird (Arbeitsweise gemäß DE-PS 25 31 780, Beispiel 3), auf 5,0 eingestellt. Die Pastenviskosität, angepastet mit Dioctylphthalat im Verhältnis 100: 60, ist der Tabelle 1 zu entnehmen.

Der Foggingwert wird wie in Beispiel 1 bestimmt. Das Ergebnis ist der Tabelle 2 zu entnehmen.

### Beispiel 3

In einem 6-$m^3$-Rührbehälter werden 1 800 kg entmineralisiertes Wasser vorgelegt. Hierzu werden 18 kg Alkylarylsulfonat, 18 kg Stearyl-diethylenglykolether, 6,5 kg Di-cetylperoxidicarbonat und 1 800 kg Vinylchlorid gegeben. Diese Mischung wird bei 25°C 15 Minuten lang gerührt und anschließend über einen

Homogenisator bei einem Homogenisierdruck von 180 bar in einen 6-$m^3$-Rührautoklaven gedrückt. Im Autoklaven wird die Reaktionsmischung auf die Polymerisationstemperatur von 52°C aufgeheizt. Die Polymerisationszeit beträgt ca. 12 Stunden. Die Aufarbeitung der Dispersion (Feststoffgehalt: 42%) erfolgt wie in Beispiel 1. Die Pastenviskosität des Pulvers, angepastet mit Dioctylphthalat im Verhältnis 100:60, ist der Tabelle 1 zu entnehmen. Der Foggingwert wird wie in Beispiel 1 bestimmt. Das Ergebnis ist der Tabelle 2 zu entnehmen.

Beispiel 4

In einem 6-$m^3$-Rührautoklaven werden 1 250 kg 52°C warmes, entmineralisiertes Wasser vorgelegt. Unter Rühren werden 17,5 kg Na-alkylbenzolsulfonat, 11 kg Stearyl-di-ethylenglykolether, 6 g Kupfersulfat, 1 kg tert.-Butyl-perbenzoat zugegeben. Nach Ausschluß von Luft wird die Mischung auf 43°C, die Rührerdrehzahl auf 10 Upm eingestellt und 2 200 kg Vinylchlorid zugefügt. Durch Zudosieren einer 0,2%igen wäßrigen Ascorbinsäurelösung wird die Reaktion gestartet und die weitere Dosierung so geführt, daß bei konstanter Polymerisationstemperatur von 43°C die Kühlkapazität von Mantel- und Rückflußkühler nahezu vollständig ausgenutzt wird. Die Zeit vom Reaktionsbeginn bis zum Druckabfall beträgt 6 Stunden. Die Aufarbeitung der Dispersion (Feststoffgehalt: 59,5 %) erfolgt entsprechend Beispiel 1. Die Pastenviskosität ist Tabelle 1, der Foggingwert Tabelle 2 zu entnehmen.

Beispiel 5

Es wird wie in Beispiel 4 verfahren, mit der Ausnahme, daß die Temperatur von 52°C bei der Polymerisation beibehalten wird, um den K-Wert 70 einzustellen. Die Aufarbeitung der Dispersion (Feststoffgehalt: 60,0%) erfolgt entsprechend Beispiel I. Die Pastenviskosität ist Tabelle 1, der Foggingwert Tabelle 2 zu entnehmen.

Beispiel 6

In einem 6-$m^3$-Rührautoklaven werden 1 250 kg 60°C warmes, entmineralisiertes Wasser vorgelegt. Unter Rühren werden 17,5 kg Na-alkylbenzolsulfonat, 11 kg $C_{20}/_{22}$-Alkyl-di-propylenglykolether und 6 g Kupfersulfat zugegeben. Nach Ausschluß von Luft wird die Mischung auf 52°C, die Rührerdrehzahl auf 10 Upm eingestellt und 2 200 kg Vinylchlorid zugefügt. Durch Zudosieren einer wäßrigen 0,2%igen Ascorbinsäurelösung und einer 0,5%igen $H_2O_2$-Lösung wird die Reaktion gestartet und die weitere Dosierung der Lösung so geführt, daß bei konstanter Polymerisationstemperatur von 52 °C die Kühlkapazität von Mantel- und Rückflußkühler nahezu vollständig ·genutzt wird. Die Zeit vom Reaktionsbeginn bis zum Druckabfall beträgt 6 Stunden. Die Aufarbeitung der Dispersion (Feststoffgehalt: 56,0 %) erfolgt entsprechend Beispiel 1. Die Pastenviskosität ist Tabelle 1, der Foggingwert Tabelle 2 zu entnehmen.

Vergleichsbeispiel A

In einem 6-$m^3$-Rührautoklaven werden 1 600 kg 60°C warmes, entmineralisiertes Wasser vorgelegt. Unter Rühren werden 16,7 kg Myristinsäure, 1,5 kg Natronlauge und 16,3 kg Stearylalkohol, 4 g Kupfersulfat und 200 g Natriumborhydrid vorgelegt. Nach Ausschluß von Luft/Sauerstoff werden 1 800 kg Vinylchlorid zugefügt. Die Mischung wird auf eine Temperatur von 43°C, die Rührerdrehzahl auf 10 Upm eingestellt. Durch Zudosierung einer 0,5%igen $H_2O_2$-Lösung wird die Reaktion gestartet und ausgesteuert. Eine halbe Stunde nach Reaktionsbeginn werden 100 1 2%ige Natronlauge in den Reaktor dosiert. Die Zeit von Reaktionsbeginn bis Druckabfall beträgt 6 Stunden. Die Aufarbeitung der Dispersion (Feststoffgehalt: 49,9%) erfolgt entsprechend Beispiel 1. Die Pastenviskosität ist Tabelle 1, der Foggingwert Tabelle 2 zu entnehmen.

Vergleichsbeispiel B

Der Versuchsablauf gestaltet sich so, wie unter Vergleichsbeispiel A beschrieben, jedoch mit der Ausnahme, daß statt Stearylalkohol Laurylalkohol eingesetzt wird. Die Aufarbeitung der Dispersion (Feststoffgehalt: 37,1%) erfolgt entsprechend Beispiel 1. Die Pastenviskosität ist Tabelle 1, der Foggingwert Tabelle 2 zu entnehmen.

Vergleichsbeispiel C

Der Verfahrensablauf gestaltet sich bei diesem Versuch so, wie unter Beispiel I beschrieben, jedoch mit der Ausnahme, daß anstelle eines $C_{20}$-$C_{22}$-Alkyl-di-ethylenglykolethers Stearylalkohol eingesetzt wird. Die Aufarbeitung der Dispersion (Feststoffgehalt: 46%) erfolgt entsprechend Beispiel 1. Die Pastenviskosität ist Tabelle 1, der Foggingwert Tabelle 2 zu entnehmen.

Vergleichsbeispiel D

Es wird verfahren wie in Beispiel 6, jedoch wird anstelle des $C_{20}/_{22}$-Alkyl-di-propylenglykolethers der $C_{20}/_{22}$-Alkohol eingesetzt. Es fällt eine große Menge Koagulat an (Feststoff der Dispersion: 26,4%).

Tabelle 1

Pastenviskositäten PVC/DOP = 100/60

| Beispiel Vergleichsbeispiel | (dPa s) D = 1 $s^{-1}$ | D = 100 $s^{-1}$ |
|---|---|---|
| 1 | 43 | 40 |
| 2 | 45 | 40 |
| 3 | 25 | 23 |
| 4 | 43 | 33 |
| 5 | 39 | 30 |
| 6 | 35 | 30 |
| A | 220 | 100 |
| B | nicht meßbar | |
| C | 45 | 39 |
| D | 155 | 108 |

Tabelle 2

Foggingtest

| Beispiel Vergleichsbeispiel | Glanz (%) |
|---|---|
| 1 | 87 |
| 2 | 82 |
| 3 | 81 |
| 4 | 89 |
| 5 | 87 |
| 6 | 91 |
| A | 71 |
| B | 33 |
| C | 65 |
| D | 81 |

Tabelle 3

Schmelzpunkt der Dispergierhilfsmittel

| Dispergierhilfsmittel | Fp. (°C) |
|---|---|
| Laurylalkohol ($C_{12}$) | 24 |
| $C_{16/18}$-Alkohol | 51 - 52 |
| $C_{20/22}$-Alkohol | 60 |
| $C_{16/18}$-Alkohol + 1 EO | 41 |
| $C_{16}$-Alkohol + 1 EO, destilliert, Reinheit 99 % | 41 |
| $C_{16/18}$-Alkohol + 2 EO | 37 |
| $C_{20/22}$-Alkohol + 2 PO | 49 |

Wie die Beispiele ausweisen, zeigen die mit dem erfindungsgemäß hergestellten Polyvinylchlorid bereiteten Pasten völlig überraschender weise ein nahezu newton'sches Fließverhalten bei gleichzeitig sehr geringer Viskosität. Die aus dem erfindungsgemäß hergestellten Polyvinylchlorid gewonnenen Fertigartikel zeichnen sich durch ein besonders geringes Fogging aus.

**Patentansprüche**

1. Verfahren zur Herstellung von verpastbaren Polymeren des Vinylchlorids oder von Mischungen des Vinylchlorids mit bis zu 30 Gewichtsprozent copolymerisierbarer Monomerer durch diskontinuierliche Polymerisation in wäßriger Emulsion oder in wäßriger Mikrosuspension in Gegenwart von mindestens einem wasserlöslichen oder monomerenlöslichen Katalysator und von einem Emulgatorsystem aus anionischem Emulgator und Dispergierhilfsmittel, dadurch gekennzeichnet, daß als Dispergierhilfsmittel ein Alkoholglykolether der allgemeinen Formel

$$R - O - ( - CH_2 - \underset{\displaystyle R_1}{CH}O - )_n - H$$

eingesetzt wird, in der R einen Alkylrest mit 16 bis 30 C-Atomen oder einen Alkylphenylrest mit 18 bis 22 C-Atomen, $R_1$ H oder einen Alkylrest mit 1 bis 2 C-Atomen und n eine Zahl von 1 bis 3 bedeutet und daß im Falle der wäßrigen Emulsion aus dem anionischen Emulgator, dem Dispergierhilfsmittel und zumindest einem Teil der zur Polymerisation benötigten wäßrigen Phase eine Prädispersion hergestellt wird und dann erst die übrigen Komponenten zugegeben werden.

2. Verfahren nach Anspruch 1, dadurch gekennzeichnet, daß im Falle des Einsatzes eines monomerlöslichen Katalysators aus dem anionischen Emulgator, dem Dispergierhilfsmittel, dem monomerlöslichen Katalysator und zumindest einem Teil der zur Polymerisation benötigten wäßrigen Phase eine Prädispersion hergestellt und dann erst das Monomere zugeführt wird.

3. Verfahren nach Anspruch 2, dadurch gekennzeichnet, daß der Dispergiervorgang mittels Homogenisiermaschine durchgeführt wird.

4. Verfahren nach Anspruch 1, dadurch gekennzeichnet, daß eine Mischung aus dem anionischen Emulgator, dem Dispergierhilfsmittel, dem Katalysator, zumindest einem Teil der zur Polymerisation benötigten wäßrigen Phase und zumindest einem Teil des Monomeren mittels Homogenisiermaschine homogenisiert wird.

5. Verfahren nach Anspruch 1, dadurch gekennzeichnet, daß eine Mischung aus dem anionischen Emulgator, dem Dispergierhilfsmittel und gegebenenfalls Wasser dem Polymerisationsansatz während der Polymerisationsperiode absatzweise oder kontinuierlich zugegeben wird.

6. Verfahren nach Anspruch 1 oder 2, dadurch gekennzeichnet, daß die Prädispersion nur mit 30 bis 80

Gewichtsprozent der insgesamt benötigten Menge des anionischen Emulgators hergestellt und dem Polymerisationsansatz zugefügt wird, während der Rest des Emulgators oder eines den Emulgator bildenden Bestandteils nach einem Umsatz von 10 bis 60 Gewichtsprozent dem Polymerisationsgemisch absatzweise oder kontinuierlich als wäßrige Lösung zudosiert wird.

7. Verfahren nach einem der Ansprüche 1 bis 6, dadurch gekennzeichnet, daß in der angegebenen Formel n eine Zahl von 1 bis 2 darstellt.

8. Verfahren nach einem der Ansprüche 1 bis 7, dadurch gekennzeichnet, daß $R_1$ Wasserstoff bedeutet.

9. Verfahren nach einem der Ansprüche 1 bis 8, dadurch gekennzeichnet, daß $R_1$ den Methylrest bedeutet.

## Revendications

1. Procédé de préparation de polymères du chlorure de vinyle pouvant être mis en pâte, ou de mélanges du chlorure de vinyle avec jusqu'à 30% en poids de monomères copolymérisables, par polymérisation discontinue en émulsion aqueuse ou en micro-suspension aqueuse en présence d'au moins un catalyseur hydrosoluble ou soluble dans les monomères et d'un système émulsifiant constitué par un émulsifiant anionique et par un adjuvant de dispersion, caractérisé par le fait que l'on utilise, comme adjuvant de dispersion, un éther glycolique d'alcool de la formule générale

$$R - O - ( - CH_2 - \underset{R_1}{CHO} - )_n - H$$

dans laquelle R représente un radical alkyle comportant de 16 à 30 atomes de carbone ou un radical alkylphényle comporte de 18 à 22 atomes de carbone, $R_1$ représente de l'hydrogène ou un radical alkyle comportant de 1 à 2 atomes de carbone et n représente un nombre entier d'une valeur de 1 à 3 et que, dans le cas de l'émulsion aqueuse, on prépare une pré-dispersion à partir de l'émulsifiant anionique, de l'adjuvant de dispersion et d'au moins une partie de la phase aqueuse nécessaire pour la polymérisation, et qu'on ajoute ensuite seulement les autres composants.

2. Procédé selon la revendication 1, caractérisé par le fait que dans le cas où l'on utilise un catalyseur soluble dans le monomère, on prépare une prédispersion à partir de l'émulsifiant anionique, de l'adjuvant de dispersion, du catalyseur soluble dans le monomère et d'au moins une partie de la phase aqueuse nécessaire pour la polymérisation, et qu'on délivre ensuite seulement le monomère.

3. Procédé selon la revendication 2, caractérisé par le fait que l'on effectue l'opération de dispersion à l'aide d'une machine d'homogénéisation.

4. Procédé selon la revendication 1, caractérisé par le fait qu'à l'aide d'une machine à homogénéiser, on homogénéise un mélange constitué par l'émulsifiant anionique, par l'adjuvant de dispersion, par le catalyseur, par au moins une partie de la phase aqueuse nécessaire pour la polymérisation et par au moins une partie du monomère.

5. Procédé selon la revendication 1, caractérisé par le fait que l'on ajoute à la charge de polymérisation, par étapes ou en continu, pendant la période de polymérisation, un mélange constitué par l'émulsifiant anionique, par l'adjuvant de dispersion et éventuellement par de l'eau.

6. Procédé selon la revendication 1 ou 2, caractérisé par le fait que l'on prépare la pré-dispersion avec seulement 30 à 80% en poids de la quantité de l'émulsifiant anionique qui est globalement nécessaire et qu'on l'ajoute à la charge de polymérisation, tandis que le reste de l'émulsifiant ou d'un constituant formant l'émulsifiant est ajouté, par étapes ou en continu, sous forme de solution aqueuse, au mélange de polymérisation après conversion de 10 à 60% en poids.

7. Procédé selon l'une des revendications 1 à 6, caractérisé par le fait que dans la formule indiquée, n représente un nombre d'une valeur de 1 à 2.

8. Procédé selon l'une des revendications 1 à 7, caractérisé par le fait que $R_1$ représente de l'hydrogène.

9. Procédé selon l'une des revendications 1 à 8, caractérisé par le fait que $R_1$ représente le radical méthyle.

## Claims

1. A process for the preparation of paste-forming polymers of vinyl chloride or of mixtures of vinyl chloride with up to 30 per cent by weight of copolymerisable monomers by batchwise polymerisation in aqueous emulsion or in aqueous micro suspension in the presence of at least one water-soluble or monomer-soluble catalyst and of an emulsifier system composed of an anionic emulsifier and a dispersant, characterised in that the dispersant used is an alcohol glycol ether of the general formula

$$R - O - ( - CH_2 - \underset{\displaystyle R_1}{CHO} - )_n - H$$

in which R denotes an alkyl radical having 16 to 30 carbon atoms or an alkylphenyl radical having 18 to 22 carbon atoms, $R_1$ denotes hydrogen or an alkyl radical having 1 to 2 carbon atoms and n denotes a number from 1 to 3, and that in the aqueous emulsion case a predispersion is prepared from the anionic emulsifier, the dispersant and at least a portion of the aqueous phase required for the polymerisation and only then are the other components added.

2. A process according to claim 1, characterised in that in the case where a monomer-soluble catalyst is used a pre-dispersion is prepared from the anionic emulsifier, the dispersant, the monomer-soluble catalyst and at least a portion of the aqueous phase required for the polymerisation and only then is the monomer added.

3. A process according to claim 2, characterised in that the dispersing operation is carried out by means of a homogeniser.

4. A process according to claim 1, characterised in that a mixture of the anionic emulsifier, the dispersant, the catalyst, at least a portion of the aqueous phase required for the polymerisation and at least a portion of the monomer is homogenised by means of a homogeniser.

5. A process according to claim 1, characterised in that a mixture of the anionic emulsifier, the dispersant and, if desired, water is added stepwise or continuously to the polymerisation batch during the polymerisation cycle.

6. A process according to claim 1 or 2, characterised in that the pre-dispersion is prepared with only 30 to 80 per cent by weight of the total amount of the anionic emulsifier which is necessary and is added to the polymerisation batch, while the remainder of the emulsifier or of one of the components of the emulsifier is metered stepwise or continuously as an aqueous solution into the polymerisation mixture after a conversion of from 10 to 60 per cent by weight.

7. A process according to any one of claims 1 to 6, characterised in that n in the given formula is a number from 1 to 2.

8. A process according to any one of claims 1 to 7, characterised in that $R_1$ denotes hydrogen.

9. A process according to any one of claims 1 to 8, characterised in that $R_1$ denotes the methyl radical.